# EUROPEAN PATENT APPLICATION

(11) **EP 4 711 916 A1**
(43) Date of publication of application: **18.03.2026**
(21) Application number: 24835277.5
(22) Date of filing: 27.06.2024
(51) Int. Cl.: G06F 8/61, G06F 8/65, G06F 9/4401, G06F 9/445

(54) **APPLICATION INSTALLATION PACKAGE GENERATION METHOD, APPLICATION INSTALLATION METHOD, AND RELATED DEVICE**

(30) Priority: 06.07.2023 CN 202310829393
(71) Applicant: Huawei Technologies Co., Ltd., Shenzhen, Guangdong 518129 (CN)
(72) Inventor: YANG, Cheng, Shenzhen, Guangdong 518129 (CN); YIN, Yonghong, Shenzhen, Guangdong 518129 (CN); LI, Yalei, Shenzhen, Guangdong 518129 (CN); WANG, Zhen, Shenzhen, Guangdong 518129 (CN); DING, Lei, Shenzhen, Guangdong 518129 (CN); TIAN, Hongyu, Shenzhen, Guangdong 518129 (CN)
(74) Representative: Gill Jennings & Every LLP
(86) International application number: PCT/CN2024/101930
(87) International publication number: WO 2025/007796

(57) **Abstract**

This application discloses an application installation package generation method, an application installation method, and a related device. In a static linking condition, a server may compile archived images of a plurality of versions of an application at a plurality of preset locations based on a source project component and a source component of the application, and a terminal device may apply to the server for an archived image of a corresponding version based on an existing storage space status, and implement downloading, verification, installation, uninstallation, and the like of the archived image. In this way, the terminal device can independently load an application. A static linking relationship of the application is kept consistent with that of a source project, and the original static linking relationship of the source project is not affected. In addition, because the source component of the application and the source project component participate in static linking together, an existing code segment and data segment of the source project can be reused. Therefore, the archived image of the application may include only content different from that of the source project. This reduces a size of the archived image of the application, improves downloading and installation efficiency, and improves user experience.

## Description

This application claims priority to Chinese Patent Application No. 202310829393.6, filed with the China National Intellectual Property Administration on July 6, 2023 and entitled "APPLICATION INSTALLATION PACKAGE GENERATION METHOD, APPLICATION INSTALLATION METHOD, AND RELATED DEVICE", which is incorporated herein by reference in its entirety.

### TECHNICAL FIELD

This application relates to the field of terminal technologies, and in particular, to an application installation package generation method, an application installation method, and a related device.

### BACKGROUND

With popularization of smart terminal devices and continuous development of internet technologies, a plurality of types of terminal devices such as a smart wearable device, a smart home device, and an internet of things device have become indispensable products in people's daily life. To meet increasing use requirements of users, types and a quantity of applications (Application, APP) adapted to these terminal devices are also increasing.

However, for some applications, a user cannot flexibly perform an operation such as installation or uninstallation for the applications on a terminal device, resulting in poor user experience.

### SUMMARY

Embodiments of this application provide an application installation package generation method, an application installation method, and a related device, to support a user in flexibly performing an operation such as installation or uninstallation for an application on a terminal device, thereby improving user experience.

According to a first aspect, an embodiment of this application provides an application installation package generation method. The method includes: A server recognizes difference content, where the difference content is content that varies after a source component of an application is merged with a base version component, and the base version component is a source file of an operating system on a terminal device and a source file of a service developed based on the operating system; the server adds redirection information to the difference content, where the redirection information indicates that a link address range of the difference content is a first link address range, the first link address range does not conflict with a second link address range, the second link address range is a link address range of the base version component, the first link address range is a storage address range on the terminal device, the second link address range is another storage address range on the terminal device, and the storage address range is an address range of a memory for running executable program code; and the server generates a first image, and extracts first content in the first image to generate an installation package of the application, where the first content is the difference content being compiled and statically linked, and the first image is generated after the server compiles and statically links the base version component and the difference content.

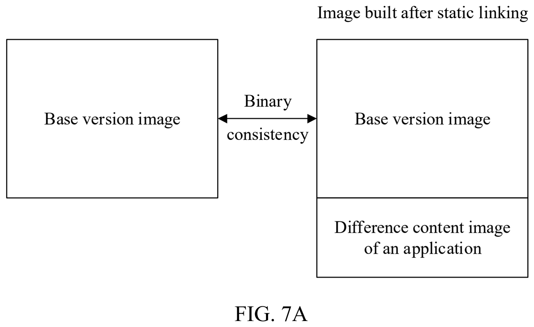

The storage address range on the terminal device may be an address range of a memory for running executable program code on the terminal device. The memory for running executable program code may be a memory such as a ROM, a RAM, or a PSRAM. An image of the base version component is run on the terminal device. The second link address range may be an address range for running the image of the base version component on the terminal device. The first image may be an image (including a base version image and a difference content image of the application) built after static linking shown in FIG. 7A, and the first content may be the difference content image of the application. In this application, the difference content image of the application is completely isolated from the base version image. Therefore, it may be understood that the first link address range does not conflict with the second link address range, that is, when the application is installed on the terminal device, the original base version image is not destructed.

Through implementation of the method provided in the first aspect, in a static linking condition, the server may generate an application installation package that can be independently loaded and installed on the terminal device, thereby reducing dependency of an application loading process on a running framework, a jump table, and the like. In this case, a static linking relationship of the application is kept consistent with that of a source project, and the original static linking relationship of the source project is not affected. In addition, because the source component of the application and a source project component (that is, the base version component) jointly participate in static linking, the application can reuse an existing code segment and data segment of the source project. Therefore, the application installation package may include only content different from that of the source project. In this way, a size of the application installation package can be reduced, so that less redundant information is delivered to the terminal device of a user, efficiency of downloading and installing the application is improved, and user experience is further improved. In addition, for external developers (for example, application developers), they can participate in application ecosystem expansion of terminal products by providing only the source component of the application. This is relatively convenient and reduces development costs.

In a possible implementation, the first link address range includes N preset link address ranges, N is a positive integer greater than 1, and that the server generates the first image specifically includes: The server compiles and statically links the base version component and the difference content N times to generate first images of N versions that are in one-to-one correspondence with the N preset link address ranges. That the server extracts the first content in the first image to generate the installation package of the application specifically includes: The server extracts first content in the first images of the N versions to generate installation packages of the N versions of the application.

In this way, the server may generate installation packages of a plurality of versions of the application, so that an application installation package of a corresponding version can be flexibly allocated to the terminal device based on current device space capacity information of the terminal device.

In a possible implementation, the installation packages of the N versions of the application include an installation package that is of the application and that corresponds to a free storage address range on the terminal device, and the method further includes: The server sends, to the terminal device based on the free storage address range on the terminal device, the installation package that is of the application and that corresponds to the free storage address range.

In this way, when the terminal device needs to install an application, the server may obtain, based on a free storage address range on the terminal device, an installation package that is of the application and that corresponds to the free storage address range. In this way, when the terminal device installs and runs the application, a source project or another application is not affected.

In a possible implementation, the free storage address range on the terminal device is sent by the terminal device to the server.

In this way, the server may learn of current device capacity information of the terminal device by using the free storage address range sent by the terminal device, to further determine a specific version of an application installation package to be allocated to the terminal device.

In a possible implementation, the N preset link address ranges have an equal size.

In this way, the server may arrange and manage each application installation package in a grid form, preset the N link address ranges having an equal size, and pre-generate the installation packages of the N versions of the application. When the terminal device requests to download an installation package, the installation package of a corresponding version may be directly delivered, thereby improving downloading efficiency.

In a possible implementation, the first link address range is one link address range, and before the server adds the redirection information to the difference content, the method further includes: The server receives a first message sent by the terminal device, where the first message includes the first link address range, and the first link address range is a free storage address range on the terminal device. That the server adds the redirection information to the difference content specifically includes: The server adds the redirection information to the difference content based on the first link address range.

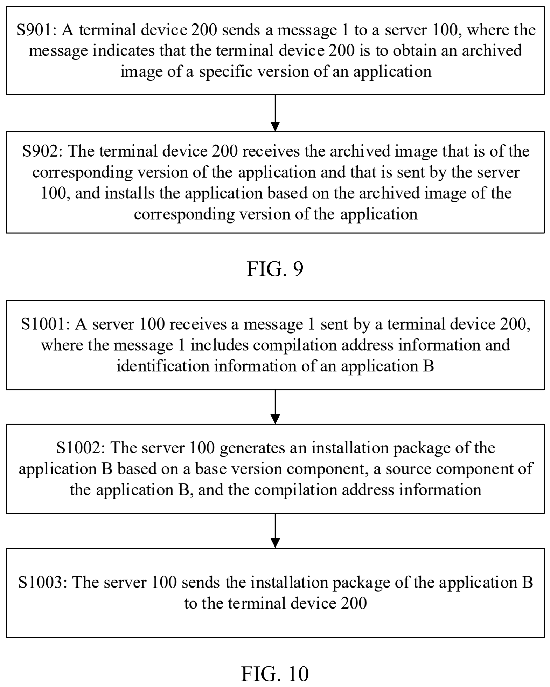

The first message may be a message 1 shown in FIG. 10.

In this way, the server may determine the redirection information, that is, the link address range of the difference content, based on the first message sent by the terminal device, and then generate the installation package of the application. The first link address range may be determined based on a size of the installation package of the application. Therefore, higher space utilization of the terminal device can be implemented.

In a possible implementation, the method further includes: The server sends the installation package of the application to the terminal device based on the first link address range.

In this way, when the terminal device installs and runs the application, a source project or another application is not affected.

In a possible implementation, the difference content is an entire difference file or difference code in the difference file.

In a possible implementation, the source component of the application exists in any one of the following forms: a source file form; and a form of code snippets scattered in the base version component.

When the source component of the application exists in a source file form, the difference content may be the entire difference file. When the source component of the application exists in a form of code snippets scattered in the base version component, the difference content may be the difference code in the difference file.

In a possible implementation, the installation package of the application includes an init segment, and the init segment is used to complete initialization and registration of the application.

In this way, when an initialization action needs to be performed, the initialization action may be completed through copying from the init segment of the installation package of the application to a running segment in a form of data copying.

According to a second aspect, an embodiment of this application provides an application installation method, applied to a terminal device. The method includes: The terminal device receives an installation package of an application sent by a server, where the installation package of the application is generated based on first content in a first image, the first content is difference content being compiled and statically linked, the difference content is content that varies after a source component of the application is merged with a base version component, the base version component is a source file of an operating system on the terminal device and a source file of a service developed based on the operating system, the first image is generated after the server compiles and statically links the base version component and the difference content, a link address range of the difference content is a first link address range, the first link address range does not conflict with a second link address range, the second link address range is a link address range of the base version component, the first link address range is a storage address range on the terminal device, the second link address range is another storage address range on the terminal device, and the storage address range is an address range of a memory for running executable program code; and the terminal device installs the application in the first link address range based on the installation package of the application.

Through implementation of the method provided in the second aspect, the terminal device may download, from the server, an application installation package that can be independently loaded and installed on the terminal device, the terminal device may install the application on a plurality of storage devices such as a ROM/RAM/PSRAM of the terminal device as required, and a user can be supported in downloading, installing, or uninstalling the application in any sequence. In addition, because the source component of the application and a source project component (that is, the base version component) jointly participate in static linking, the application can randomly access any function, data, and the like in a source project, does not need any intermediate jump mechanism, GOT, and the like, and does not depend on hardware such as an MMU to implement jumping. In addition, the application can reuse the source project to a maximum extent, for example, call a similar function, or access a same static variable, and a location of an access object is in a source project image. In this case, repeated compilation for the application is not needed, and a size of the installation package of the application is as small as possible. In addition, there is no need to introduce an interpreter, a virtual machine, or the like that supports running of the application on the terminal device. A running location of the installed application is in a storage device having same performance as that for the source project, and running performance of the application is consistent with that of a code segment in a monolithic kernel. Initialization needs to be completed only during initial execution (for example, initialization is completed by using an application management module on the terminal device), and smoothness of the application can be improved.

In a possible implementation, the method further includes: The terminal device sends a first message to the server, where the first message includes the first link address range, and the first link address range is a free storage address range on the terminal device.

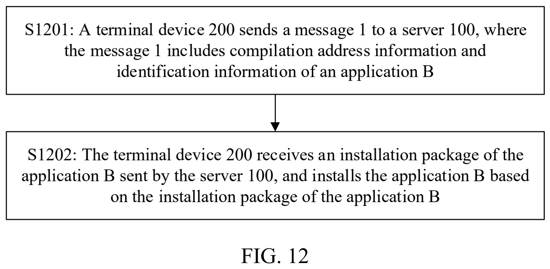

The first message may be a message 1 shown in FIG. 12.

In a possible implementation, the difference content is an entire difference file or difference code in the difference file.

In a possible implementation, the source component of the application exists in any one of the following forms: a source file form; and a form of code snippets scattered in the base version component.

In a possible implementation, the installation package of the application includes an init segment, and the init segment is used to complete initialization and registration of the application.

According to a third aspect, an embodiment of this application provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the electronic device is enabled to perform the method according to any possible implementation of the first aspect or the second aspect.

According to a fourth aspect, an embodiment of this application provides a computer storage medium. The computer storage medium stores a computer program, the computer program includes program instructions, and when the program instructions are run on an electronic device, the electronic device is enabled to perform the method according to any possible implementation of the first aspect or the second aspect.

According to a fifth aspect, an embodiment of this application provides a computer program product. When the computer program product runs on a computer, the computer is enabled to perform the method according to any possible implementation of the first aspect or the second aspect.

### BRIEF DESCRIPTION OF DRAWINGS

FIG. 1 is a diagram in which an MCU platform loads an application based on an interpreter according to an embodiment of this application;
FIG. 2 is a diagram of a communication system according to an embodiment of this application;
FIG. 3 is a diagram of a scenario of generating and downloading an application installation package according to an embodiment of this application;
FIG. 4 is a schematic flowchart of an application installation package generation method according to an embodiment of this application;
FIG. 5 is a diagram of a compilation and linking process of a source component of an application according to an embodiment of this application;
FIG. 6 is a diagram of perceiving a difference file or difference content generated after a source component of an application is merged with a base version image according to an embodiment of this application;
FIG. 7A is a diagram of generating an archived image of a specific version of an application based on a base version component and a source component of the application according to an embodiment of this application;
FIG. 7B is a diagram of generating archived images of a plurality of versions of an application A at different preset locations (that is, preset compilation address spaces) based on a specified base version image according to an embodiment of this application;
FIG. 8 is a diagram of a process in which a server 100 generates installation packages of a plurality of versions of a plurality of different applications and a process in which a terminal device 200 downloads installation packages of corresponding versions of a plurality of different applications according to an embodiment of this application;
FIG. 9 is a schematic flowchart of an application installation method according to an embodiment of this application;
FIG. 10 is a schematic flowchart of another application installation package generation method according to an embodiment of this application;
FIG. 11 is a diagram of a process in which a server 100 generates different application installation packages and a process in which a terminal device 200 downloads a plurality of application installation packages according to an embodiment of this application;
FIG. 12 is a schematic flowchart of another application installation method according to an embodiment of this application;
FIG. 13 is a diagram of a structure of a server 100 according to an embodiment of this application;
FIG. 14 is a diagram of a structure of a terminal device 200 according to an embodiment of this application; and
FIG. 15 is a diagram of a structure of an MCU in a terminal device 200 according to an embodiment of this application.

### DESCRIPTION OF EMBODIMENTS

The following clearly and completely describes the technical solutions in embodiments of this application with reference to the accompanying drawings in embodiments of this application. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of' means two or more.

It should be understood that, the terms "first", "second", and the like in the specification, claims, and accompanying drawings of this application are used to distinguish between different objects, but are not used to describe a specific sequence. In addition, the terms "include" and "have" and any variations thereof are intended to cover non-exclusive inclusion. For example, a process, method, system, product, or device that includes a series of steps or units is not limited to the listed steps or units, but optionally further includes an unlisted step or unit, or optionally further includes another inherent step or unit for the process, method, product, or device.

The "embodiment" mentioned in this application means that specific features, structures, or characteristics described with reference to the embodiment may be included in at least one embodiment of this application. Appearance of the phrase at various positions in the specification does not necessarily refer to a same embodiment, or an independent or alternative embodiment mutually exclusive with another embodiment. A person skilled in the art explicitly and implicitly understands that the embodiments described in this application may be combined with other embodiments.

Currently, a data coprocessor (for example, a smart sensor hub Sensor Hub) in a wearable device (for example, a smartwatch, a sports watch, or a heart rate belt), an internet of things (Internet of Things, IOT) device, and a complex electronic device like a mobile phone, a robotic arm, or an intelligent vehicle that are common in the market usually includes multi-chip frameworks of one or more micro controller units (Micro Controller Unit, MCU). Introduction of the MCU plays an important role in improving a battery life of a device, reducing a burden of a main core processor, achieving low power consumption, and the like.

Different from a chip with strong performance and abundant resources (for example, a chip on a mobile phone), the MCU usually includes only one central processing unit (Central Processing Unit, CPU), a necessary built-in storage, and basic peripherals (for example, a general-purpose input/output GPIO interface, a serial interface, and a timer). These limited hardware resources are integrated on one chip. Due to resource and performance limitations, running of an MCU platform usually has the following features:
1. When a bare-metal program or a real-time operating system (Real-Time Operating System, RTOS) is run, it is difficult to support a complex dynamic loading capability and memory mapping capability without introducing an additional framework mechanism.
2. A system image is directly burnt onto a non-volatile memory, for example, a read-only memory (Read-Only Memory, ROM). A chip fetches an instruction from the ROM and executes the instruction without additional loading. In addition, the ROM has a limited quantity of program/erase cycles and long program/erase time, and cannot adapt to a high-frequency data modification action.
3. Most system images of MCU products are statically linked monolithic kernel (monolithic kernel) architectures, a kernel mode and a user mode are not distinguished, and components are strongly coupled.

Static linking means that all modules (including a library file and program code) are merged into one executable file during compilation, and when the executable file is started, all the modules are loaded.

Based on the foregoing running features of the MCU platform, when a system function needs to be updated or an application needs to be added for the MCU product, a common solution in the industry is to compile a new version and update an MCU image through full upgrade or differential upgrade. For a same version, an application carried by the MCU image is usually fixed and cannot support an operation such as dynamic installation or uninstallation performed by a user for the application.

To expand an application ecosystem of the MCU products, in recent years, wearable product vendors introduce virtual operating environments or interpreters of various languages into high-end MCU chips, so that applications of interpreted languages such as JavaScript (JS) and Python can run on the MCU platform, and newly installed applications can be loaded into a dynamic memory area such as a random access memory (Random Access Memory, RAM) or a pseudo static random access memory (Pseudo Static Random Access Memory, PSRAM), and run based on an interpreter.

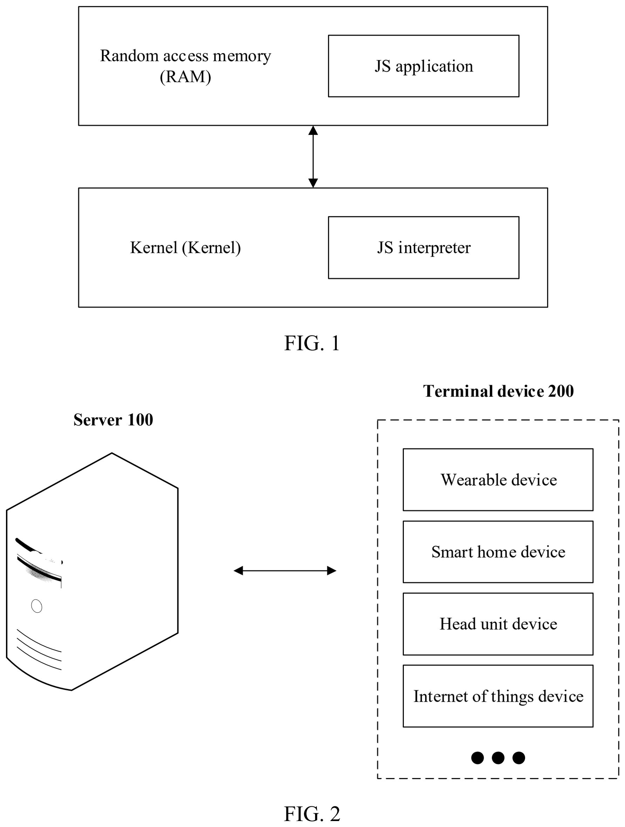

As shown in FIG. 1, a JS application is used as an example. A JS interpreter is usually compiled together with a kernel, and provides functions such as syntax parsing, variable management, memory management, type conversion, and exception catching for the JS application based on a kernel capability.

For example, the JS application runs on an MCU platform. First, to implement a virtual operating environment or an interpreter architecture on the MCU platform, not only a large quantity of ROM resources and RAM resources are required, but also a relatively high performance requirement is imposed on a chip. Storage space and computing power of most low-cost MCU chips cannot meet the foregoing condition. Especially, dynamic memory resources such as a RAM/PSRAM for running an application are particularly insufficient (for example, some MCU processors commonly used in some smartwatches include only 2.5 MB PSRAM space), and costs of expanding RAM space are much higher than costs of expanding ROM space. Second, when the JS application is run, a CPU cannot directly fetch an instruction, but needs to perform complex actions such as JS interpreter translation and memory allocation. Running efficiency of the JS application is far lower than that of an application that can be directly run on a ROM. In addition, more memory is consumed. To avoid lagging during running of the application, there is a higher requirement on performance of the MCU chip.

It is easy to learn that, although the virtual operating environment or the interpreter architecture implemented on the MCU platform can implement flexible loading of the application, there are relatively high requirements on memory resources and performance. Currently, chips on only some high-end sports watches and wristbands in the market can support dynamic installation of the JS application, and such a capability cannot be extended to low-end chips.

Based on full static linking, some researchers attempt to compile an application into a component that is independent of a main project (which may also be referred to as a source project/main program/native image), to implement independent loading of the application. However, when a full static linking project is generated, a compiler and a linker relocate a symbol during compilation and linking, and convert a reference relationship of the symbol into an absolute address. Therefore, in a finally generated executable file, all symbols such as code and data are mapped to a unique fixed physical address. In this case, a strong coupling relationship exists between components. Similarly, an application compiled together with a monolithic kernel also has a coupling relationship, and calling for a function of the monolithic kernel within the application needs to comply with a static linking relationship. How to cancel the foregoing dependency relationship is a main problem to be resolved in the research direction currently.

One solution is a solution for dynamically downloading and running an application based on a global offset table (Global Offset Table, GOT). This solution depends on an -fpic capability of a compiler to compile the application to generate location-independent code, and download the GOT and the independently compiled application into a terminal device. In addition, the application further needs to be parsed, and initialization information of the application is sent to an application manager of the terminal device by using an external tool. Then, the application manager completes initialization (for example, space resource allocation or data initialization), jump, and the like of the application, and the application manager further needs to modify an address of a referenced entry in the GOT to an actual address based on the initialization information of the application. It can be learned that an entire implementation process of the solution is relatively complex, and depends on the compiler capability and the external tool. In addition, because the application is independently compiled, a common function is repeatedly compiled. This may cause a relatively large size of an installation package of the application or GOT expansion.

Another solution is as follows: Based on a memory protection unit (Memory Protection Unit, MPU) and a memory management unit (Memory Management Unit, MMU), a memory is divided into an accessible area memory and an inaccessible area memory, and the inaccessible area memory is divided into a plurality of memory blocks. Then, an application that needs to be loaded is divided into a front-end program and a back-end program, and the front-end program is loaded into the accessible area memory. When the back-end program is run, a part of the back-end program is dynamically loaded into the inaccessible area memory, and partial space in the inaccessible area memory is replaced, so that dependency of the application on space resources can be reduced. However, in this solution, a chip needs to include an MMU hardware module, and this solution does not concern how to resolve a problem of decoupling a static link between an application and a native image.

Still another solution is a solution in which a SoC (System on Chip, system on chip) supports dynamic loading of an application on a chip without depending on an MMU. In this solution, a native image needs to include an application loading module and a clearing module for initialization of the application. However, a prerequisite for implementing this solution is that the application and a main program do not have a dependency relationship in a compilation phase. Actually, the native image includes key code segments such as a kernel and a C library, and a condition in which the application does not depend on the foregoing code segments is relatively strict. In addition, in this solution, a shared function set is transferred to the application by using the loading module, and a function call relationship of the application on the native image is resolved based on redirection. However, an actual effect of the shared function set is similar to an actual effect of the foregoing GOT. There may also be a problem that an installation package of the application has a relatively large size or the shared function set expands with calling of the application. In addition, because the shared function set is a non-standard mechanism, each application needs to have parsing, redirection, and jumping capabilities.

It is easy to learn that the foregoing solution based on the GOT or the shared function set needs to depend on a compiler capability to parse a compiled image file to initialize an application, calculate an offset value of an address, perform redirection, and the like. An implementation procedure is complex, and one jump is needed for the application to access a kernel, resulting in low performance. In addition, because the application is independently compiled, repeated compilation or a relatively large quantity of times of calling of the application for a common function may cause a relatively large size of an installation package of the application or GOT expansion, and a GOT cannot be reused between different applications. The foregoing solution based on the MPU and the MMU can implement dynamic loading in an execution process of an application. However, the solution does not concern how to resolve a problem of decoupling a static link between an application and a native image, is applicable to only replacement of some data of the application in the native image, and requires hardware support.

Based on the foregoing problem, embodiments of this application provide an application installation package generation method. In a static linking condition, a server may compile archived images (which may also be referred to as archived application installation packages, archived application packages, or application images) of a plurality of versions of an application at a plurality of preset locations based on a base version component (which may also be referred to as a source project component) and a source component of the application, and a terminal device may apply to the server for an archived image of a corresponding version based on an existing storage space status and information about the base version component, and implement functions such as downloading, verification, installation, and uninstallation of the archived image. In this way, the terminal device can independently load an application. A static linking relationship of the application is kept consistent with that of the source project, and the original static linking relationship of the source project is not affected. In addition, because the source component of the application and a source project component participate in static linking together, an existing code segment and data segment of the source project can be reused. Therefore, the archived image of the application may include only content different from that of the source project. In this way, a size of the archived image of the application is small, downloading and installation efficiency can be improved, and user experience can be improved.

It should be noted that the base version component (which may also be referred to as a source project component) mentioned in embodiments of this application may be a source file of an operating system of a terminal device and source files corresponding to some system services, system applications, and the like that are developed on the operating system. The native image (which may also be referred to as a base version image, a base image, or an original image) may be an image generated by compiling and linking the base version component.

It should be noted that there may be two types of applications mentioned in embodiments of this application. One is an application that directly fetches and runs an instruction on a processor (for example, an MCU chip) of a terminal device, and this application may be referred to as a native application (Native Application). The other is an application that is incrementally developed based on a native image, and this application may be referred to as a third-party application. Through implementation of the method provided in embodiments of this application, the application may be loaded as an independent software unit, and a static linking relationship of the native image is not affected after loading.

In actual application, one application may include a plurality of components, each component may be understood as a basic building block of the application, and one component may define functions of one or more aspects of the application.

The following first describes a communication system according to an embodiment of this application.

**FIG. 2** **shows an example of a communication system according to an embodiment of this application.**

As shown in FIG. 2, the communication system may include a server 100 and a terminal device 200.

The server 100 (which may also be referred to as an application market server) may be configured to generate application installation packages of a plurality of versions based on a base version component and a source component of an application; may be further configured to communicate with the terminal device 200 (for example, push an application installation package of a specific version to the terminal device 200, and receive a message sent by the terminal device 200); and the like.

The server 100 may be a conventional server, or may be a cloud server. A specific type of the server 100 is not limited in embodiments of this application.

The terminal device 200 may be used for downloading, verification, installation, uninstallation, and the like of an application installation package; may be further configured to communicate with the server 100 (for example, send a message to the server 100, or receive a message sent by the server 100); and the like.

The terminal device 200 may be of various types. A specific type of the terminal device 200 is not limited in embodiments of this application. For example, the terminal device 200 may be a wearable device (for example, a smartwatch), a smart home device (for example, a smart screen, a smart water heater, a smart lamp, or a smart air conditioner), a head unit device (for example, a smart vehicle microcontroller unit), an internet of things device, a mobile phone, an augmented reality (Augmented Reality, AR) device, a virtual reality (Virtual Reality, VR) device, a tablet computer, a desktop computer, a laptop computer, a handheld computer, or a notebook computer.

In embodiments of this application, an example in which the terminal device 200 is a terminal device using an MCU as a computing core is used to describe the method provided in embodiments of this application.

In embodiments of this application, the server 100 may include an MCU application building module. The MCU application building module may be configured to generate application installation packages of a plurality of versions based on a base version component and a source component of an application; may be further configured to perceive a difference file, difference content, and the like generated after the source component of the application is merged with the base version component; may be further configured to add a redirection symbol (which may also be referred to as redirection information or a redirection mark) to the source component of the application at an expected fine granularity (for example, a function level, a file level, or a component level); and the like.

In embodiments of this application, to facilitate application management, the terminal device 200 may include an application management module. The application management module may be included in a native image. The application management module may be configured to apply to the server 100 for an application installation package of a corresponding version based on an existing storage space status of the terminal device 200 and information about the base version component, and implement functions such as registration, downloading, verification, installation, uninstallation, and management of an application.

It should be understood that a quantity of servers and a quantity of terminal devices included in the communication system are not limited in embodiments of this application.

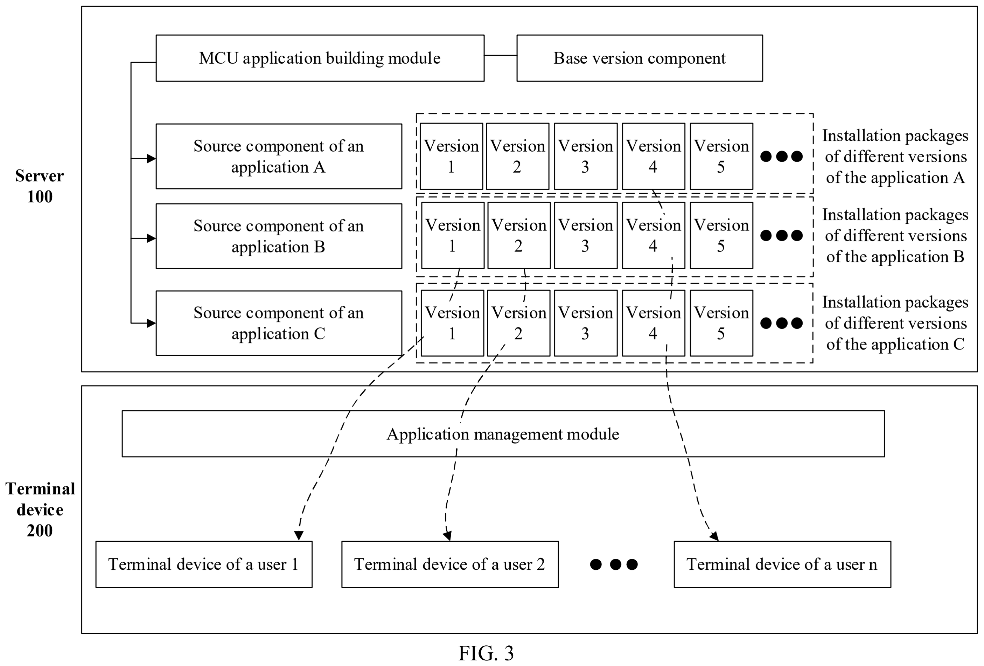

For example, as shown in FIG. 3, the server 100 may generate, by using the MCU application building module, application installation packages of a plurality of versions (for example, installation packages of different versions of an application A, installation packages of different versions of an application B, and installation packages of different versions of an application C) at a plurality of preset locations based on a base version component and a source component of an application (for example, a source component of the application A, a source component of the application B, and a source component of the application C), and terminal devices of different users (for example, a terminal device of a user 1, a terminal device of a user 2, and a terminal device of a user n) may apply to the server 100 for downloading application installation packages of corresponding versions based on existing storage space statuses of the terminal devices of the users and information about base version components by using application management modules on the terminal devices of the users (for example, the terminal device of the user 1 downloads an installation package of a version 1 of the application B, the terminal device of the user 2 downloads an installation package of a version 2 of the application B, and the terminal device of the user n downloads an installation package of a version 4 of the application A).

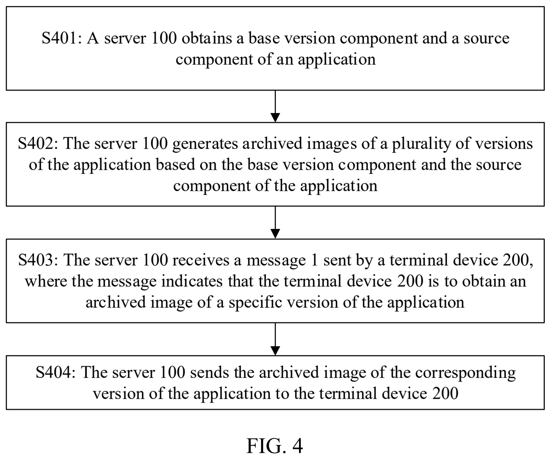

**FIG. 4** **shows an example of a specific procedure of an application installation package generation method according to an embodiment of this application.**

As shown in FIG. 4, the method may be applied to the server 100. It should be noted that, not limited to the server 100, the method is also applicable to another device, for example, a terminal device or a development device of a developer. This is not limited in embodiments of this application. The following describes in detail specific steps of the method.

S401: The server 100 obtains a base version component and a source component of an application.

The base version component may be a source file of an operating system of a terminal device and source files corresponding to some system services, system applications, and the like developed on the operating system. The base version component may be uploaded by a developer to the server 100 by using a development device, or may be pre-stored in the server 100. A manner in which the server 100 obtains the base version component is not limited in this embodiment of this application.

The source component of the application may be an application component in a form of compilation middleware before static link redirection is completed in a compilation process. The developer may upload the source component of the application to the server 100 by using the development device. The application may be archived and managed in a form of the source component on the server 100, and the server 100 may build a corresponding application image based on a specified base version component.

The source component of the application mentioned in embodiments of this application may be a file in a specific format, for example, may include but is not limited to a .c file, an .i file, an .s file, or an .o file; or may be code snippets scattered in a source project.

In embodiments shown in FIG. 4, FIG. 8, and FIG. 9, an example in which a source component of an application is a file in a specific format is used for description.

In subsequent embodiments shown in FIG. 10, FIG. 11, and FIG. 12, an example in which a source component of an application is code snippets scattered in a source project is used for description. Details are not described herein.

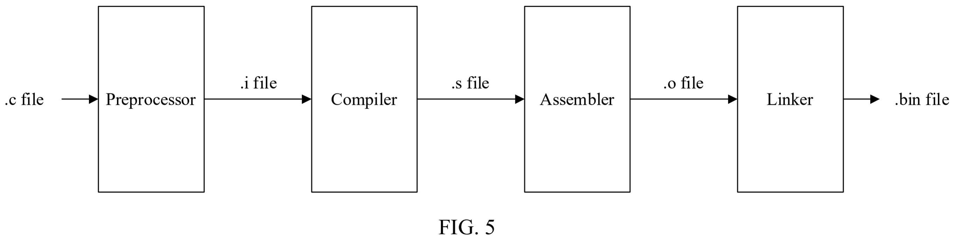

Refer to FIG. 5. An example in which the source component of the application is a .c file is used to describe a compilation and linking process of the source component of the application.

First, a preprocessor may precompile the .c file (including removing an annotation, processing a preprocessed file starting with #, and the like) to generate an .i file.

Then, a compiler may compile the .i file (including lexical analysis, syntactic analysis, semantic analysis, intermediate code generation, assembly code generation, and the like) to generate an .s file (that is, an assembly file).

Subsequently, an assembler may translate the .s file to generate an .o file (that is, an object file that can be redirected). Main work of the assembler may include translating the assembly code into a corresponding binary instruction by referring to an instruction set, generating some important information required in a subsequent linking process, and assembling the important information into the object file in a form of a section (section).

Finally, a linker may assemble code segments and data segments in object files (that is, .o files) generated by the assembler into a code segment and a data segment of an executable file (for example, a .bin file). Main work of the linker may include merging segment tables (that is, integrating segment information in a plurality of object files that can be redirected into one file), adjusting a segment offset (a size of the segment table changes after merging, and therefore an address needs to be appropriately offset), merging symbol tables (that is, integrating symbols in the plurality of object files that can be redirected into one file), and redirecting symbols (the linker associates each symbol definition with a preset address, and then modifies all references to these symbols, so that the symbols point to a storage location, thereby completing redirection).

**S402:** The server 100 generates archived images of a plurality of versions of the application based on the base version component and the source component of the application.

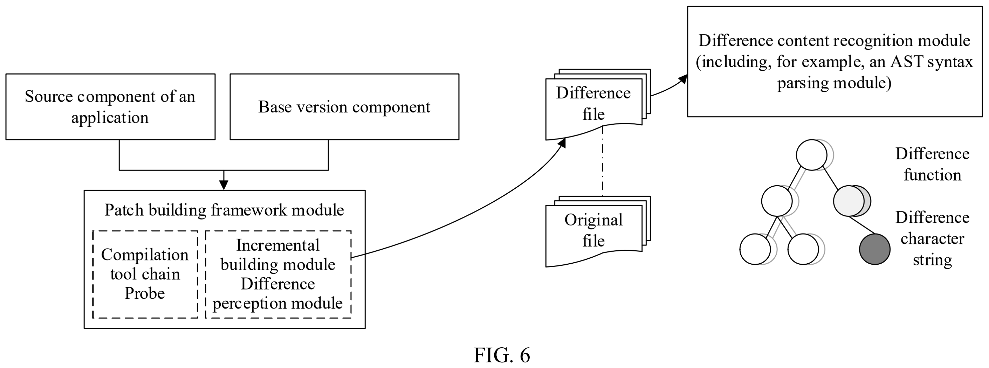

With reference to FIG. 6 and FIG. 7A, the following describes an example of a process in which the server 100 generates an archived image of a specific version of the application based on the base version component and the source component of the application.

Refer to FIG. 6. The server 100 may include a patch (Patch) building framework module, and the patch building framework module may include a compilation tool chain, a probe, an incremental building module, and a difference perception module. The compilation tool chain may be configured to compile and link the base version component and the source component of the application. The probe may be configured to perceive content that is input into the compilation tool chain. The incremental building module may be configured to merge the source component of the application with a base version image, perform incremental compilation after the source component of the application is merged with the base version image, and the like. The difference perception module may be configured to perceive a difference file, difference content, and the like generated after the source component of the application is merged with the base version image.

In some examples, the patch building framework module may be included in the foregoing MCU application building module.

First, the server 100 may perform basic building on the base version component to obtain an intermediate product of a compilation and linking process, so as to facilitate subsequent incremental compilation. The basic building may be a process in which the server 100 compiles and links the base version component. The base version component may generate the base version image through basic building.

Then, the server 100 may perform incremental building. The incremental building may include the following: The server 100 merges the source component of the application with the base version component, the server 100 recognizes difference content (which may be a difference file or specific difference content in the difference file), and the server 100 compiles and links the difference content. The source component of the application may generate an archived image of the application through incremental building.

It should be noted that, in an incremental building process, the server 100 may compile only the difference content (that is, perform incremental compilation), or may compile the source component of the application and the base version component as a whole (that is, perform full compilation). This is not limited in this embodiment of this application. In this embodiment of this application, incremental compilation is merely used as an example, and should not constitute a limitation on this application.

It should be noted that, in this embodiment of this application, because the source component of the application may exist in a form of a file in a specific format (for example, in a form of a source code file), or may exist in a form of code snippets scattered in a source project, difference perception may be selectively performed based on an existence form (which may also be referred to as a fine granularity of distribution) of the source component of the application.

For example, if the source component of the application exists in a form of a file in a specific format, in a difference perception process, only a file difference needs to be perceived, and a content difference does not need to be further perceived. An entire file of the source component of the application is the content difference. In this case, an original file shown in FIG. 6 is an empty file, and the difference file is the entire file of the source component of the application.

For another example, if the source component of the application exists in a form of code snippets scattered in a source project, in a difference perception process, not only a file difference needs to be perceived, but also a content difference (for example, a difference in a function or a character string) needs to be further perceived by using a difference content recognition module. In this case, an original file shown in FIG. 6 is a file existing before the source component of the application is merged with the base version image, and the difference file is a file that is different from the original file after the source component of the application is merged with the base version image. The difference content recognition module may include but is not limited to an abstract syntax tree (Abstract Syntax Tree, AST) syntax parsing module.

It should be noted that, before compiling the difference content, the server 100 may perform related processing on the difference content (for example, adding a suffix to the difference content) to prevent a compilation conflict. A process of preventing the compilation conflict includes but is not limited to added string extraction, function prototype extraction, static member recognition, and compilation symbol marking. For a specific execution process, refer to related technical documents. Details are not described herein again.

In this embodiment of this application, before compiling the difference content, the server 100 may specify a preset compilation address (or referred to as a link address) space, and add a compilation redirection symbol (indicating a compilation address space of the difference content) to the difference content. After the compilation redirection symbol is added, a compilation process may be triggered. After the compilation process is completed, a linking process may be triggered, and a linker may read the compilation redirection symbol, so that the difference content can be redirected to the preset compilation address space.

The preset compilation address space (which may also be referred to as a compilation address range) may be a ROM address space, a RAM address space, a PSRAM address space, or the like, and may be determined based on an MCU platform resource. This is not limited in this embodiment of this application.

It should be noted that the foregoing preset compilation address may be a logical address, and the logical address may have a mapping relationship with an address of a ROM/RAM/PSRAM or the like on a terminal device of a user. The foregoing preset compilation address may alternatively be a physical address, for example, an address of a ROM/RAM/PSRAM or the like on a terminal device of a user.

In this embodiment of this application, the difference content to which the compilation redirection symbol is added can prohibit kernel initialization and compiler optimization, but make a change to manual initialization (that is, the difference content may include an initialization function, and self-initialization of the application is completed by accessing and executing an address function), so that the difference content can be loaded as an independent software unit.

In this embodiment of this application, after the difference content that is included in the source component of the application and different from the base version image is completely recognized and the compilation redirection symbol is added, a patch (Patch) may be generated. After the patch is merged with the base version component, the server 100 may compile the patch, and statically link the patch and the base version image together. In a binary file generated after static linking is completed, as shown as an example in FIG. 7A, a difference content image of the application may be completely isolated from the base version image, and a static linking relationship of the base version image is not changed (that is, no key binary difference is generated).

The difference content image of the application shown as an example in FIG. 7A is an archived image that is of a specific version of the application and that is generated by the server 100. The difference content image of the application includes an initialization function (which may also be referred to as an init segment) corresponding to the application. In an image built after static linking that is shown as an example in FIG. 7A, the server 100 may extract a difference content image of the application in the image, to generate an installation package of a specific version of the application.

In this embodiment of this application, because the difference content of the application and the base version image jointly participate in static linking, the application can directly access/call a function, data, and the like in the base version image without intermediate jumping.

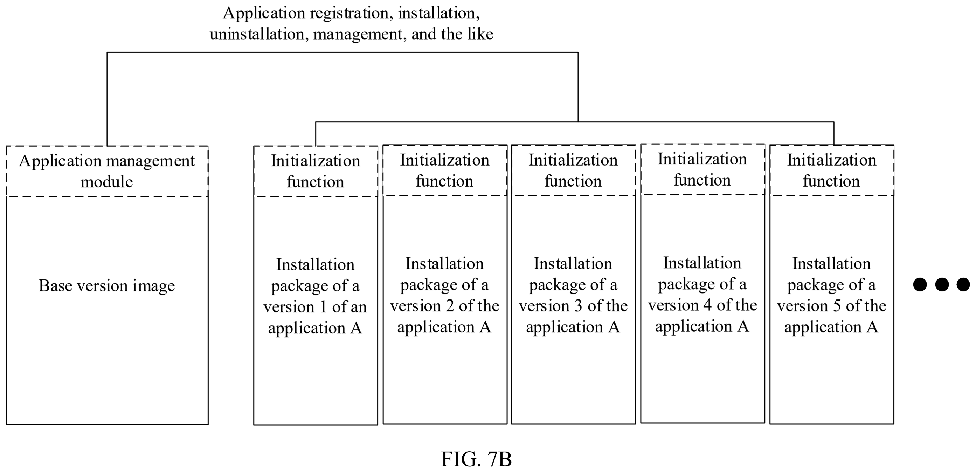

Refer to FIG. 7B. To facilitate application management, the base version image may include an application management module, and the module may be configured to be responsible for application registration, installation, uninstallation, management, and the like.

Still refer to FIG. 7B. Using an application A as an example, to implement flexible installation and uninstallation of the application, the server 100 may generate archived images of a plurality of versions of the application A (which may also be referred to as installation packages of the application A) at different preset locations (that is, preset compilation address spaces) based on a specified base version image, for example, an installation package of a version 1 of the application A, an installation package of a version 2 of the application A, an installation package of a version 3 of the application A, an installation package of a version 4 of the application A, and an installation package of a version 5 of the application A. A user may select an application installation package of a matched version based on current device space capacity information of the terminal device to download and install the application.

Still refer to FIG. 7B. Different applications include different sections (Section), and have different initialization actions. Therefore, in embodiments of this application, an archived image of an application needs to include an initialization function of the application, that is, the initialization function of the application needs to be fixed at a determined location for loading the application, for example, fixed at a start address of a preset compilation address of each version. In this way, when an initialization action needs to be performed, the initialization action may be completed through copying from the init segment of the installation package of the application to a running segment in a form of data copying.

It is easy to understand that archived images of different versions of the application have a same size, but correspond to different compilation address ranges.

It should be noted that a type of the compilation tool chain is not limited in this embodiment of this application. For example, the compilation tool chain may be an IAR compilation tool chain. For example, when the installation package of the application A is generated, a used compilation tool chain is IAR, and a source component of the application A exists in a form of a source code file. In a compilation and linking script ILINK linker configuration file (ILINK Configuration File, ICF), sections such as .data, .text, .rodata, and .init in a source component set of the application A may be redirected to a specified compilation address space range in a file dimension.

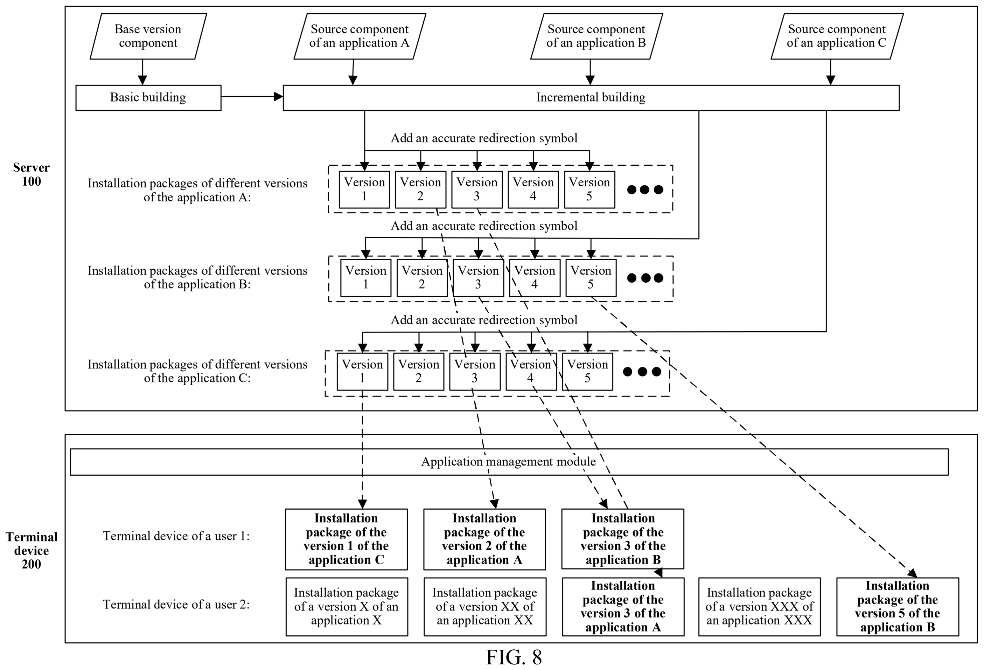

FIG. 8 is a diagram of a process in which the server 100 generates installation packages of a plurality of versions of a plurality of different applications and a process in which the terminal device 200 downloads installation packages of corresponding versions of a plurality of different applications according to this application.

Refer to FIG. 8. The server 100 may generate installation packages of a plurality of versions of a plurality of different applications. An example in which an installation package of an application A, an installation package of an application B, and an installation package of an application C are generated is used.

The server 100 may generate installation packages of a plurality of versions of the application A (for example, an installation package of a version 1 of the application A, an installation package of a version 2 of the application A, an installation package of a version 3 of the application A, an installation package of a version 4 of the application A, and an installation package of a version 5 of the application A) based on a base version component, a source component of the application A, and a plurality of preset compilation address ranges.

In the embodiment shown in FIG. 8, the server 100 arranges and manages application installation packages in a grid form, that is, a compilation address area corresponding to an installation package of each version of an application have an equal space, and compilation address areas corresponding to installation packages of neighboring versions of the application are equidistant. It is easy to understand that sequentially changing a specified compilation address range can separately generate installation packages of a plurality of different versions for a same application. The installation packages of the plurality of different versions respectively correspond to different grid locations (for example, a grid location corresponding to the installation package of the version 1 of the application A is a grid location of the version 1 in FIG. 8, a grid location corresponding to the installation package of the version 2 of the application A is a grid location of the version 2 in FIG. 8, a grid location corresponding to the installation package of the version 3 of the application A is a grid location of the version 3 in FIG. 8, a grid location corresponding to the installation package of the version 4 of the application A is a grid location of the version 4 in FIG. 8, a grid location corresponding to the installation package of the version 5 of the application A is a grid location of the version 5 in FIG. 8).

It is easy to understand that a grid location corresponding to an application installation package of each version corresponds to a different compilation address range. For example, a compilation address range corresponding to the grid location of the version 1 is 0x10 to 0x20, a compilation address range corresponding to the grid location of the version 2 is 0x30 to 0x40, a compilation address range corresponding to the grid location of the version 3 is 0x50 to 0x60, a compilation address range corresponding to the grid location of the version 5 is 0x70 to 0x80, and a compilation address range corresponding to the grid location of the version 5 is 0x90 to 0x100. It should be noted that the compilation address range is merely an example, and should not constitute a limitation on this application.

Similarly, the server 100 may also generate installation packages of a plurality of versions of the application B (for example, an installation package of a version 1 of the application B, an installation package of a version 2 of the application B, an installation package of a version 3 of the application B, an installation package of a version 4 of the application B, and an installation package of a version 5 of the application B) based on a base version component, a source component of the application B, and a plurality of preset compilation address ranges.

Similarly, the server 100 may also generate installation packages of a plurality of versions of the application C (for example, an installation package of a version 1 of the application C, an installation package of a version 2 of the application C, an installation package of a version 3 of the application C, an installation package of a version 4 of the application C, and an installation package of a version 5 of the application C) based on a base version component, a source component of the application C, and a plurality of preset compilation address ranges.

It is easy to understand that, in the embodiment shown in FIG. 8, compilation address ranges corresponding to the grid locations of the version 1, the version 2, the version 3, the version 4, and the version 5 corresponding to the installation packages of the application B and compilation address ranges corresponding to the grid locations of the version 1, the version 2, the version 3, the version 4, and the version 5 corresponding to the installation packages of the application C are the same as compilation address ranges corresponding to the grid locations of the version 1, the version 2, the version 3, the version 4, and the version 5 corresponding to the installation packages of the application A. For example, if the compilation address range corresponding to the grid location of the version 1 of the installation package of the application A is 0x10 to 0x20, both the compilation address range corresponding to the grid location of the version 1 of the installation package of the application B and the compilation address range corresponding to the grid location of the version 1 of the installation package of the application C are 0x10 to 0x20.

It is easy to learn that, in the embodiment shown in FIG. 8, because address space ranges corresponding to all application installation packages have an equal size, a space may be wasted. For example, if a size of a preset compilation address range is 1M, and a size of an application installation package is less than 1M, a space may be wasted.

It is easy to understand that the foregoing plurality of preset compilation address ranges do not conflict with a compilation address range of the base version component, that is, the foregoing plurality of preset compilation address ranges may be compilation address ranges on the terminal device other than the compilation address range of the base version component.

It should be noted that the preset compilation address management manner (grid-based management manner) in the embodiment shown in FIG. 8 is merely an example, and should not constitute a limitation on this application. In some other embodiments of this application, the preset compilation address management manner may be another manner. This is not limited in this embodiment of this application.

S403: The server 100 receives a message 1 sent by the terminal device 200, where the message indicates that the terminal device 200 is to obtain an archived image of a specific version of the application.

When the terminal device 200 needs to download and install one or more applications, the terminal device 200 may request the server 100 for downloading an application installation package (that is, request the server 100 for obtaining an archived image of a specific version of the application). For example, the server 100 may receive the message 1 sent by the terminal device 200, where the message indicates that the terminal device 200 is to obtain an archived image of a specific version of the application.

In some examples, the message 1 may be an application installation policy sent by the terminal device 200 to the server 100. The message 1 may include identification information of an application that needs to be installed, and may further include current device space capacity information of the terminal device 200. The current device space capacity information of the terminal device 200 may be address range information corresponding to a current free storage space of the terminal device 200. For example, using a ROM as an example, if an address range corresponding to a current free storage space of the ROM is 0x10 to 0x20, the current device space capacity information of the terminal device 200 may be 0x10 to 0x20.

In some examples, when a plurality of applications need to be installed on the terminal device 200, the message 1 may further include related information about an installation sequence of the plurality of applications. In this way, the server 100 may determine, based on the installation sequence, a specific version of an application installation package that needs to be sent to the terminal device 200.

In actual application, an operating system may have a large quantity of versions. Therefore, an operating system installed on each terminal device may have a different version. Therefore, to adapt to each terminal device, the server 100 may generate, based on base version components of different versions and a source component of an application, application installation packages corresponding to the base version components of different versions. In this case, the message 1 may further include related information (for example, version information) of a base version component that has been installed on the terminal device 200 currently. In this way, the server 100 may determine, based on the related information, a specific version of a base version component corresponding to an application installation package to be sent to the terminal device 200.

S404: The server 100 sends the archived image of the corresponding version of the application to the terminal device 200.

Specifically, after determining, based on the message 1, the archived image of the corresponding version of the application to be obtained by the terminal device 200, the server 100 may send the archived image (which may also be referred to as an installation package) of the corresponding version of the application to the terminal device 200.

For example, still refer to FIG. 8. It is assumed that the application A, the application B, and the application C need to be installed on a terminal device of a user 1, an installation sequence is the application C, the application A, and the application B, and free address ranges on the terminal device of the user 1 include 0x10 to 0x20, 0x30 to 0x40, 0x50 to 0x60, and the like. In FIG. 8, the address range 0x10 to 0x20 corresponds to application installation packages of the version 1, the address range 0x30 to 0x40 corresponds to application installation packages of the version 2, and the address range 0x50 to 0x60 corresponds to application installation packages of the version 3. Therefore, according to the application installation sequence on the terminal device of the user 1, it can be learned that the address range 0x10 to 0x20 corresponds to the installation package of the version 1 of the application C, the address range 0x30 to 0x40 corresponds to the installation package of the version 2 of the application A, and the address range 0x50 to 0x60 corresponds to the installation package of the version 3 of the application B. Further, the server 100 may send the installation package of the version 1 of the application C, the installation package of the version 2 of the application A, and the installation package of the version 3 of the application B to the terminal device of the user 1. In this way, after receiving the foregoing installation packages, the terminal device of the user 1 may install the corresponding applications in corresponding address spaces, and complete registration and initialization actions of the applications.

For example, still refer to FIG. 8. It is assumed that address ranges 0x10 to 0x20, 0x30 to 0x40, and 0x70 to 0x80 on a terminal device of a user 2 are all occupied. For example, an application X of a version X is installed at 0x10 to 0x20, an application XX of a version XX is installed at 0x30 to 0x40, and an application XXX of a version XXX is installed at 0x70 to 0x80. It is assumed that the application A further needs to be installed on the terminal device of the user 2, and a free address range is 0x50 to 0x60. In FIG. 8, the address range 0x50 to 0x60 corresponds to the installation package of the version 3 of the application A. Therefore, the server 100 may send the installation package of the version 3 of the application A to the terminal device of the user 2. In this way, after receiving the installation package of the version 3 of the application A, the terminal device of the user 2 may install the application A in a corresponding address space, and complete registration and initialization actions of the application A. Similarly, it is assumed that the application B further needs to be installed on the terminal device of the user 2, and a free address range is 0x90 to 0x100. In FIG. 8, the address range 0x90 to 0x100 corresponds to the installation package of the version 5 of the application B. Therefore, the server 100 may send the installation package of the version 5 of the application B to the terminal device of the user 2. In this way, after receiving the installation package of the version 5 of the application B, the terminal device of the user 2 may install the application B in a corresponding address space, and complete registration and initialization actions of the application B.

That is, the user may request, based on the current device space capacity information of the terminal device, the server 100 for downloading an application installation package of a matched version, and install the application on the terminal device based on the installation package.

In actual application, the server 100 may further add key information such as a protocol and security verification to the archived image of the application, to generate a transmissible application installation package.

In some examples, the application installation package may include loading location information (that is, loading address range information) of the application on the terminal device 200, so that the terminal device 200 can learn, after downloading the application installation package, a specific location to which the application is to be loaded.

In some examples, similar to the server 100, the terminal device 200 may also arrange and manage application installation packages in a grid form. After downloading an installation package of an application, the terminal device 200 may directly load the application to a frontmost location in a current free address range, and so on. Each time an installation package of an application is downloaded, the application may be loaded to a frontmost location in a current free address range. For example, still refer to FIG. 8. The terminal device of the user 1 is used as an example. Before the installation package of the version 1 of the application C is downloaded, a frontmost location in a current free address range is a location for loading the application C of the version 1. Therefore, after the installation package of the version 1 of the application C is downloaded, the application C may be directly loaded to the location. When the installation package of the version 2 of the application A is subsequently downloaded, the frontmost location in the current free address range becomes a location for loading the application A of the version 2. Therefore, after the installation package of the version 2 of the application A is downloaded, the application A may be directly loaded to the location.

Through implementation of the method provided in the embodiment shown in FIG. 4, in a static linking condition, the server 100 may generate an application installation package that can be independently loaded and installed on the terminal device, thereby reducing dependency of an application loading process on a running framework, a jump table, and the like. In this case, a static linking relationship of the application is kept consistent with that of a source project, and the original static linking relationship of the source project is not affected. In addition, because the source component of the application and a source project component (that is, the base version component) jointly participate in static linking, the application can reuse an existing code segment and data segment of the source project. Therefore, the application installation package may include only content different from that of the source project. In this way, a size of the application installation package can be reduced, so that less redundant information is delivered to the terminal device of a user, efficiency of downloading and installing the application is improved, and user experience is further improved. In addition, for external developers (for example, application developers), they can participate in application ecosystem expansion of terminal products by providing only the source component of the application. This is relatively convenient and reduces development costs.

In some examples, the method provided in the embodiment shown in FIG. 4 is also applicable to a scenario in which the source component of the application exists in a form of code snippets scattered in the source project. In this case, in a difference perception process, not only the file difference needs to be perceived, but also the content difference (for example, a difference in a function or a character string) needs to be further perceived by using the difference content recognition module.

**Based on the embodiments shown in** **FIG. 4** **and** **FIG. 8****,** **FIG. 9** **shows an example of a specific procedure of an application installation method according to an embodiment of this application.**

As shown in FIG. 9, the method may be applied to the terminal device 200. The following describes in detail specific steps of the method.

**S901:** The terminal device 200 sends a message 1 to the server 100, where the message indicates that the terminal device 200 is to obtain an archived image of a specific version of an application.

Specifically, when the terminal device 200 needs to download and install one or more applications, the terminal device 200 may request the server 100 for downloading an application installation package (that is, request the server 100 for obtaining an archived image of a specific version of the application). For example, the terminal device 200 may send the message 1 to the server 100 by using an application management module, where the message indicates that the terminal device 200 is to obtain an archived image of a specific version of the application.

In some examples, the message 1 may be an application installation policy sent by the terminal device 200 to the server 100. The message 1 may include identification information of an application that needs to be installed, and may further include current device space capacity information of the terminal device 200. The current device space capacity information of the terminal device 200 may include address range information corresponding to a current free storage space of the terminal device 200. For example, using a ROM as an example, if an address range corresponding to a current free storage space of the ROM is 0x10 to 0x20, the current device space capacity information of the terminal device 200 may be 0x10 to 0x20.

In some examples, when a plurality of applications need to be installed on the terminal device 200, the message 1 may further include related information about an installation sequence of the plurality of applications. In this way, the server 100 may determine, based on the installation sequence, a specific version of an application installation package that needs to be sent to the terminal device 200.

S902: The terminal device 200 receives the archived image that is of the corresponding version of the application and that is sent by the server 100, and installs the application based on the archived image of the corresponding version of the application.

Specifically, after determining, based on the message 1, the archived image of the corresponding version of the application to be obtained by the terminal device 200, the server 100 may send the archived image (which may also be referred to as an installation package) of the corresponding version of the application to the terminal device 200. After receiving the archived image that is of the corresponding version of the application and that is sent by the server 100, the terminal device 200 may install the application in a corresponding address space based on the archived image of the corresponding version of the application.

It is easy to understand that, after the one or more applications are installed, the terminal device 200 may also support a user in uninstalling the one or more applications in any sequence, without affecting a source project.

Through implementation of the method provided in the embodiment shown in FIG. 9, the terminal device 200 may download, from the server 100, an application installation package that can be independently loaded and installed on the terminal device 200, the terminal device 200 may install the application on a plurality of storage devices such as a ROM/RAM/PSRAM of the terminal device 200 as required, and a user can be supported in downloading, installing, or uninstalling the application in any sequence. In addition, because the source component of the application and a source project component (that is, the base version component) jointly participate in static linking, the application can randomly access any function, data, and the like in a source project, does not need any intermediate jump mechanism, GOT, and the like, and does not depend on hardware such as an MMU to implement jumping. In addition, the application can reuse the source project to a maximum extent, for example, call a similar function, or access a same static variable, and a location of an access object is in a source project image. In this case, repeated compilation for the application is not needed, and a size of the installation package of the application is as small as possible. In addition, there is no need to introduce an interpreter, a virtual machine, or the like that supports running of the application on the terminal device 200. A running location of the installed application is in a storage device having same performance as that for the source project, and running performance of the application is consistent with that of a code segment in a monolithic kernel. Initialization needs to be completed only during initial execution (for example, initialization is completed by using an application management module on the terminal device 200), and smoothness of the application can be improved.

FIG. 10 shows an example of a specific procedure of another application installation package generation method according to an embodiment of this application.

As shown in FIG. 10, the method may be applied to the server 100. It should be noted that, not limited to the server 100, the method is also applicable to another device, for example, a terminal device or a development device of a developer. This is not limited in embodiments of this application.

In the following scenarios of embodiments shown in FIG. 10, FIG. 11, and FIG. 12, a source component of an application is scattered in one or more source files of a source project (that is, a base version component) in a form of source code snippets. Requirements corresponding to the scenarios may include but are not limited to the following two types: (1) An application depends on some non-external functions (for example, a Static function) in the source project for implementation. To avoid a version change caused by a change of the source project, the application needs to be split into scattered code snippets to be scattered in source files of a corresponding function. (2) An application is a feature expected to be split from the source project and independently load as an application or an external module.

The following describes in detail specific steps of the method.

S1001: The server 100 receives a message 1 sent by the terminal device 200, where the message 1 includes compilation address information and identification information of an application B.

Specifically, when the terminal device 200 needs to install an application, for example, needs to install the application B, the terminal device 200 may send the message 1 to the server 100. The message 1 may include the compilation address information and the identification information of the application B. After receiving the message 1, the server 100 may perform a subsequent step based on the message 1 to generate an installation package of the application B.

The compilation address (or referred to as a link address) information may be information about a location at which the terminal device 200 loads the application B (corresponding address range information when the application B is loaded). For example, the terminal device 200 needs to install the application B in a free storage space, and an address range corresponding to the storage space is 0x10 to 0x20. In this case, the compilation address information may be 0x10 to 0x20.

It is easy to understand that, generally, before downloading an application installation package from an application market, the terminal device 200 may obtain a size of the application installation package. Therefore, the terminal device 200 may determine an address allocation policy based on the size of the application installation package, that is, determine a size of an address range that needs to be allocated to the application installation package, to determine the foregoing compilation address information.

In actual application, an operating system may have a large quantity of versions. Therefore, an operating system installed on each terminal device may have a different version. Therefore, to adapt to each terminal device, the server 100 may generate, based on base version components of different versions and a source component of an application, application installation packages corresponding to the base version components of different versions. In this case, the message 1 may further include related information (for example, version information) of a base version component that has been installed on the terminal device 200 currently. In this way, the server 100 may determine, based on the related information, a specific version of a base version component corresponding to an application installation package that needs to be generated.

S1002: The server 100 generates an installation package of the application B based on a base version component, a source component of the application B, and the compilation address information.

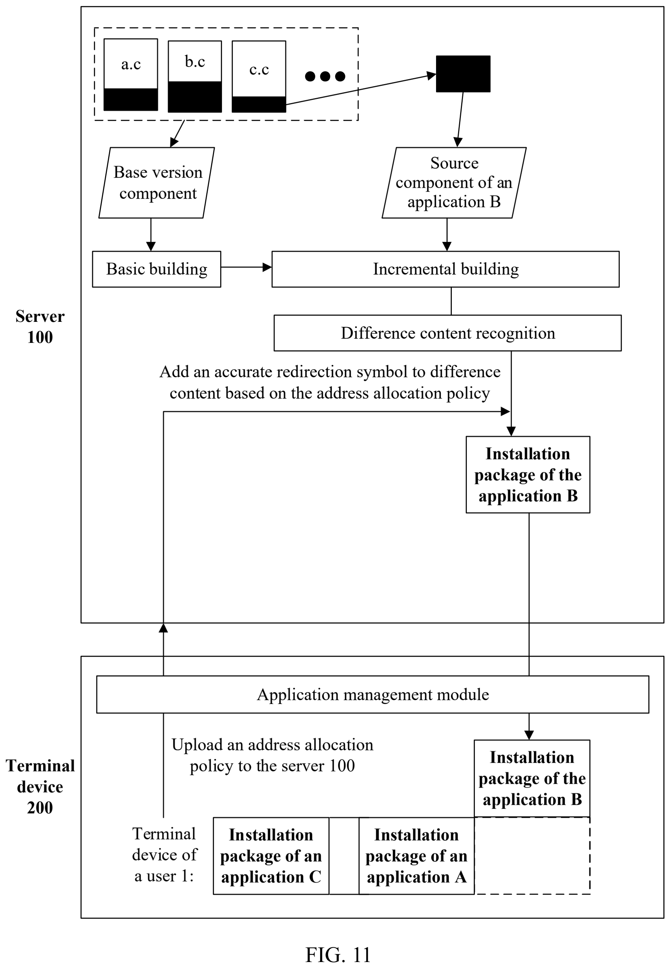

With reference to FIG. 11, the following describes an example of a process in which the server 100 generates the installation package of the application B based on the base version component, the source component of the application B, and the compilation address.

First, the server 100 may perform basic building on the base version component. The basic building may be a process in which the server 100 compiles and links the base version component. The base version component may generate the base version image through basic building. In this embodiment of this application, the base version component may be all source files of a source project before the source component of the application B is merged with the base version component (that is, all source files of the source project before the source component of the application B is scattered in one or more source files of the source project in a form of source code snippets).

Then, the server 100 may perform incremental building. The incremental building may include that the server 100 merges the source component of the application B with the base version component, the server 100 recognizes difference content, and the server 100 compiles and links a difference file to which the difference content belongs.

In this embodiment of this application, that the server 100 merges the source component of the application B with the base version component may mean that the server 100 scatters the source component of the application B in one or more source files of the source project in a form of source code snippets.

In this embodiment of this application, the difference file may be a source file that varies in the source project after the source component of the application B is merged with the base version component, compared with that before the source component of the application B is merged with the base version component.

In some examples, the difference file may include one or more source files that are in the source project and in which source code snippets of the application B are scattered. In some other examples, the difference file may alternatively include one or more source files that affect the base version component after the source component of the application B is merged with the base version component.

Refer to FIG. 11. For example, a file a.c, a file b.c, a file c.c, and the like may be all source files of the source project after the source component of the application B is merged with the base version component. A black part of the file may be a code snippet of the application B scattered in the file, and a white part is original code in the source project.

In this embodiment of this application, in addition to obtaining the difference file, the server 100 further needs to recognize and extract the difference content in the difference file. There may be a plurality of tools used for recognizing and extracting the difference content. For example, an abstract syntax tree AST may be used to recognize a code difference. A type of a tool used for recognizing and extracting the difference content is not limited in this embodiment of this application.

Then, after the difference content in the difference file is recognized and extracted, the server 100 may add an accurate redirection symbol (indicating a compilation address space of the difference content) to the difference content based on the compilation address information sent by the terminal device 200. After the redirection symbol is added, a compilation process may be triggered. After the compilation process is completed, a linking process may be triggered. A linker may read the compilation redirection symbol, so that the difference content may be redirected to a compilation address space area corresponding to the compilation address information. In this way, content of the source component of the application B that is originally mixed in source project code may be separated into an independent compilation address space area. Further, the server 100 may generate the installation package of the application B.

It is easy to understand that the installation package of the application B includes the content of the source component of the application B that is separated from the source project code.

In actual application, the installation package of the application B may further include key information such as a protocol and security verification, to facilitate transmission.

In some examples, the foregoing basic building process, the foregoing process of merging the source component of the application B with the base version component, and the foregoing process of recognizing the difference content may be performed before step S1001.

S1003: The server 100 sends the installation package of the application B to the terminal device 200.

Specifically, after generating the installation package of the application B, the server 100 may send the installation package of the application B to the terminal device 200.

It can be learned that the method provided in the embodiment shown in FIG. 10 has the features and advantages of the embodiment shown in FIG. 4. Compared with the embodiment shown in FIG. 4, in the embodiment shown in FIG. 10, a form of a source component of an application is changed to code snippets scattered in a source project, redirection of the source component of the application is more flexible, the solution has more application scenarios, and the application can invoke capabilities and content of more source projects. In other words, not only an independent application but also a feature and a component in the source project can be split and loaded in this manner, to implement dynamic downloading, installation, and uninstallation. In addition, in the embodiment shown in FIG. 10, because the terminal device 200 performs close arrangement and management on applications, compared with that in the embodiment shown in FIG. 4, an application management form is changed, so that higher space utilization on a side of the terminal device 200 can be implemented, but time for a user to obtain an application may be increased. This is not a solution with only benefits.

In some examples, the method provided in the embodiment shown in FIG. 10 is also applicable to a scenario in which a source component of an application exists in a form of a file in a specific format. In this case, in a difference perception process, only a file difference needs to be perceived, and a content difference does not need to be further perceived. An entire file of the source component of the application is the content difference.

**Based on the embodiments shown in** **FIG. 10** **and** **FIG. 11****,** **FIG. 12** **shows an example of a specific procedure of another application installation method according to an embodiment of this application.**

As shown in FIG. 12, the method may be applied to the terminal device 200. The following describes in detail specific steps of the method.

**S1201:** The terminal device 200 sends a message 1 to the server 100, where the message 1 includes compilation address information and identification information of an application B.

Specifically, when the terminal device 200 needs to download and install an application, the terminal device 200 may request the server 100 for downloading an installation package of the application. For example, if the terminal device 200 needs to download and install the application B, the terminal device 200 may send the message 1 to the server 100 through an application management module, where the message 1 includes the compilation address information and the identification information of the application B. In this way, after receiving the message 1, the server 100 may generate an installation package of the application B based on the message 1.

The compilation address information may be information about a location at which the terminal device 200 loads the application B (corresponding address range information when the application B is loaded). For example, the terminal device 200 needs to install the application B in a free storage space, and an address space range corresponding to the storage space is 0x10 to 0x20. In this case, the compilation address information may be 0x10 to 0x20.

It is easy to understand that, generally, before downloading an application installation package from an application market, the terminal device 200 may obtain a size of the application installation package. Therefore, the terminal device 200 may determine an address allocation policy based on the size of the application installation package, that is, determine a size of an address range that needs to be allocated to the application installation package, to determine the foregoing compilation address information.

For a specific process in which the server 100 generates the installation package of the application B, refer to the content in the embodiment shown in FIG. 10. Details are not described herein again.

**S1202:** The terminal device 200 receives the installation package of the application B sent by the server 100, and installs the application B based on the installation package of the application B.

Specifically, after generating the installation package of the application B, the server 100 may send the installation package of the application B to the terminal device 200. After receiving the installation package of the application B sent by the server 100, the terminal device 200 may install, based on the installation package of the application B, the application B in an address space corresponding to the compilation address information (for example, an address space corresponding to a dashed-line box on the terminal device of the user 1 shown in FIG. 11).

It is easy to understand that, after the one or more applications are installed, the terminal device 200 may also support a user in uninstalling the one or more applications in any sequence, without affecting a source project.

Through implementation of the method provided in the embodiment shown in FIG. 12, the terminal device 200 not only can dynamically download, install, and uninstall an application, but also can perform close arrangement and management on applications (for example, no free space is reserved between a loading location of the installation package of the application A and a loading location of the installation package of the application B on the terminal device of the user 1 in FIG. 11), thereby improving space utilization of the terminal device 200.

It should be noted that the embodiments shown in FIG. 4, FIG. 8, FIG. 9, FIG. 10, FIG. 11, and FIG. 12 are merely specific example application scenarios. The method provided in this application may be implemented in a plurality of application scenarios. A used programming language (such as C, C++, Python, or JavaScript), a form of a source component of an application (such as a source code file, a source code extension file, a redirectable file, or code snippets scattered in a source project), a used compilation tool chain, an application installation address management method for a terminal device, and the like should not constitute a limitation on this application.

It should be noted that, in this application, an example in which an application installation package includes content different from that in a source project but does not include content that is not different from that in the source project is used, but this is not limited. In some other embodiments of this application, the application installation package may include both the content different from that in the source project and the content that is not different from that in the source project.

The following describes a structure of a server 100 provided in an embodiment of this application.

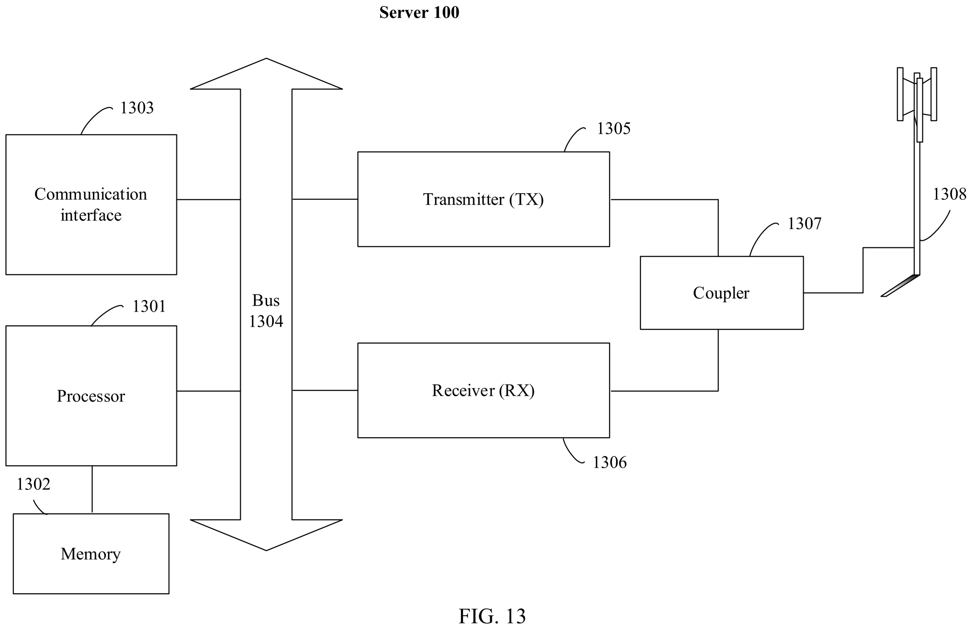

**FIG. 13** **shows an example of a structure of a server 100 according to an embodiment of this application.**

As shown in FIG. 13, the server 100 may include one or more processors 1301, a memory 1302, a communication interface 1303, a transmitter 1305, a receiver 1306, a coupler 1307, and an antenna 1308. These components may be connected to each other through a bus 1304 or in another manner. In FIG. 13, an example in which the components are connected to each other through the bus is used.

The communication interface 1303 may be used by the server 100 to communicate with another device, for example, a terminal device 200. Specifically, the communication interface 1303 may be a 3G communication interface, a 4G communication interface, a 5G communication interface, a future new radio communication interface, or the like. In addition to a wireless communication interface, a wired communication interface 1303, for example, a local access network (local access network, LAN) interface, may be further configured for the server 100. The transmitter 1305 may be configured to perform transmission processing on a signal output by the processor 1301. The receiver 1306 may be configured to perform reception processing on a mobile communication signal received through the antenna 1308.

In some examples of this application, the transmitter 1305 and the receiver 1306 may be considered as a wireless modem. In the server 100, there may be one or more transmitters 1305 and one or more receivers 1306. The antenna 1308 may be configured to convert electromagnetic energy in a transmission line into an electromagnetic wave in free space, or convert an electromagnetic wave in free space into electromagnetic energy in a transmission line. The coupler 1307 is configured to divide a mobile communication signal received through the antenna 1308 into a plurality of channels of signals, and allocate the plurality of channels of signals to a plurality of receivers 1306.

The memory 1302 is coupled to the processor 1301, and is configured to store various software programs and/or a plurality of groups of instructions. Specifically, the memory 1302 may include a high-speed random access memory, and may also include a non-volatile memory, such as one or more magnetic disk storage devices, a flash memory device, or another non-volatile solid-state storage device. The memory 1302 may store a network communication program. The network communication program may be used for communication with one or more additional devices, one or more terminal devices, or one or more network devices.

In some examples of this application, the memory 1302 may be configured to store implementation programs, on a side of the server 100, of **the application installation package generation method and the application installation method** provided in one or more embodiments of this application.

The processor 1301 may be configured to read and execute computer-readable instructions. Specifically, the processor 1301 may be configured to invoke a program stored in the memory 1302, for example, the implementation programs, on the side of the server 100, of **the application installation package generation method and the application installation method** provided in one or more embodiments of this application; and execute instructions included in the program.

**In some examples of this embodiment of this application, the server 100 may include a functional unit (which may also be referred to as a functional module) that is an MCU application building module (not shown in the figure). In actual application, the functional unit and a physical unit (which may also be referred to as a physical module) of the server 100 shown in** **FIG. 13** **may be split/combined into a plurality of units or modules for implementation, but may include consistent basic functions.**

It should be noted that the server 100 shown in FIG. 13 is merely an implementation in embodiments of this application. In actual application, the server 100 may alternatively include more or fewer components. This is not limited herein.

For more details about a function and a working principle of the server 100, refer to related content in the foregoing embodiments. Details are not described herein again.

The following describes a diagram of a structure of a terminal device 200 according to an embodiment of this application.

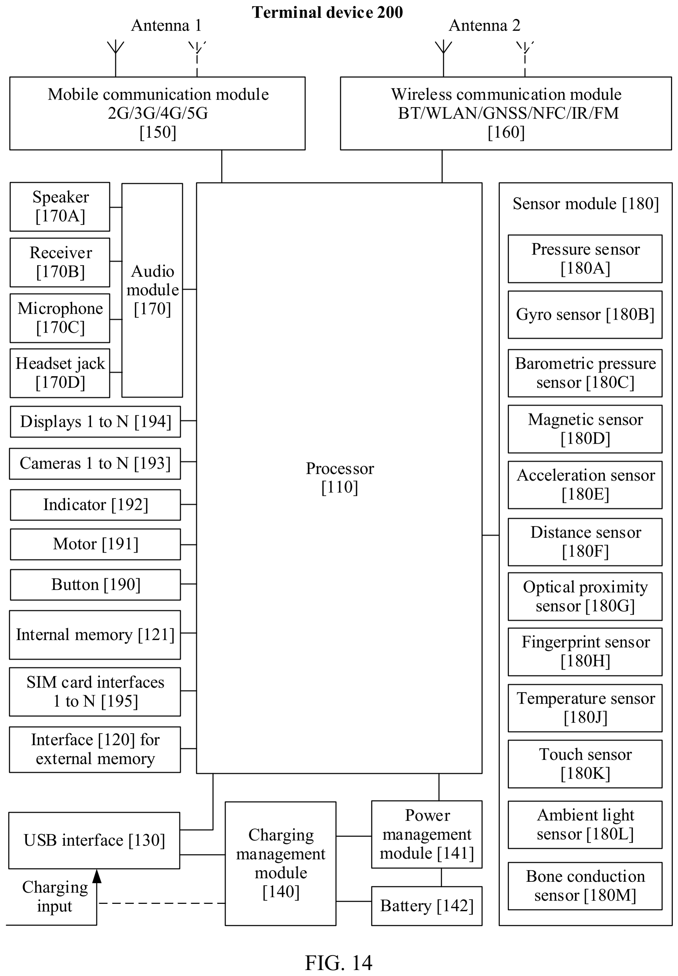

**FIG. 14** **shows an example of a structure of a terminal device 200 according to an embodiment of this application.**

As shown in FIG. 14, the terminal device 200 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal device 200. In some other embodiments of this application, the terminal device 200 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the terminal device 200. The controller may generate an operation control signal based on instruction operation code and a time sequence signal, to complete control of instruction fetching and instruction execution.

**In some examples of this embodiment of this application, the processor of the terminal device 200 may include an MCU, the terminal device 200 uses the MCU as a computing core, and the terminal device 200 may include a functional unit (which may also** be **referred to as a functional module) that is an application management module (not shown in the figure). In actual application, the functional unit and a core physical unit (which may also be referred to as a core physical module) of the terminal device 200, for example, the MCU, may be split/combined into a plurality of units or modules for implementation, but may include consistent basic functions.**

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K by using an I2C interface, so that the processor 110 communicates with the touch sensor 180K by using the I2C bus interface, to implement a touch function of the terminal device 200.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may be configured to perform audio communication, and sample, quantize, and code analog signals. In some embodiments, the audio module 170 may be coupled to the wireless communication module 160 by using a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a photographing function of the terminal device 200. The processor 110 communicates with the display 194 by using the DSI interface, to implement a display function of the terminal device 200.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like.

The USB interface 130 is an interface conforming to a USB standard specification, and may be specifically a mini USB interface, a micro USB interface, a USB Type-C interface, or the like. The USB interface 130 may be configured to connect to a charger to charge the terminal device 200, or may be configured to transmit data between the terminal device 200 and a peripheral device, or may be configured to connect to a headset to play audio by using the headset. The interface may alternatively be configured to connect to another terminal device, such as an AR device.

It may be understood that the interface connection relationship between the modules shown in this embodiment of this application is merely an example, and does not constitute a limitation on the structure of the terminal device 200. In other embodiments of this application, the terminal device 200 may alternatively use an interface connection manner that is different from the manner in the foregoing embodiment, or a combination of a plurality of interface connection manners.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the terminal device 200. When charging the battery 142, the charging management module 140 may further supply power to the terminal device 200 through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal device 200 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 200 may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the terminal device 200. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the terminal device 200 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), infrared (infrared, IR), and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the terminal device 200, the antenna 1 is coupled to the mobile communication module 150, and the antenna 2 is coupled to the wireless communication module 160, so that the terminal device 200 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The terminal device 200 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the terminal device 200 may include one or N displays 194, where N is a positive integer greater than 1.

The terminal device 200 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise and luminance of the image. The ISP may further optimize parameters such as exposure and a color temperature of a photographing scenario. In some embodiments, the ISP may be disposed in the camera 193.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the terminal device 200 may include one or N cameras 193, where N is a positive integer greater than 1.

The digital signal processor is configured to process a digital signal. In addition to processing a digital image signal, the digital signal processor may further process another digital signal. For example, when the terminal device 200 selects a frequency, the digital signal processor is configured to perform Fourier transform or the like on frequency energy.

The video codec is configured to compress or decompress a digital video. The terminal device 200 may support one or more types of video codecs. In this way, the terminal device 200 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the terminal device 200, for example, image recognition, facial recognition, voice recognition, and text understanding.

The interface 120 for external memory may be configured to connect to an external memory card, such as a micro SD card, to extend a storage capability of the terminal device 200. The external memory card communicates with the processor 110 through the interface 120 for external memory, to implement a data storage function. For example, files such as music or videos are stored in the external memory card.

The internal memory 121 may be configured to store computer executable program code, where the executable program code includes instructions. The processor 110 performs various function applications and data processing of the terminal device 200 by running the instructions stored in the internal memory 121. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the terminal device 200. In addition, the internal memory 121 may include a high-speed random access memory, and may further include a non-volatile memory, such as at least one magnetic disk storage component, a flash memory component, and a universal flash storage (universal flash storage, UFS).

In some examples of this application, the internal memory 121 may be configured to store implementation programs, on a side of the terminal device 200, of the application installation package generation method and the application installation method provided in one or more embodiments of this application. The processor 110 (for example, the MCU) may be configured to read and execute computer-readable instructions. Specifically, the processor 110 (for example, the MCU) may be configured to invoke a program stored in the internal memory 121, for example, the implementation programs, on the side of the terminal device 200, of the application installation package generation method and the application installation method provided in one or more embodiments of this application; and execute instructions included in the program.

The terminal device 200 may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The terminal device 200 may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the terminal device 200, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth, to enter a sound signal to the microphone 170C. At least one microphone 170C may be disposed on the terminal device 200. In some other embodiments, two microphones 170C may be disposed on the terminal device 200. In addition to sound signal collection, a noise reduction function may be further implemented. In some other embodiments, three, four, or more microphones 170C may be alternatively disposed on the terminal device 200, to collect a sound signal, implement noise reduction, recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 200 determines strength of the pressure based on the change of the capacitance. When a touch operation is performed on the display 194, the terminal device 200 detects strength of the touch operation through the pressure sensor 180A. The terminal device 200 may also calculate a position of the touch based on a detection signal of the pressure sensor 180A. In some embodiments, touch operations performed on a same touch position but has different touch operation strength may correspond to different operation instructions. For example, when a touch operation whose touch operation strength is less than a first pressure threshold is applied to a Messages icon, an instruction for viewing an SMS message is executed. When a touch operation whose touch operation strength is greater than or equal to the first pressure threshold is applied to the Messages icon, an instruction for creating an SMS message is executed.

The touch sensor 180K is also referred to as a "touch panel". The touch sensor 180K may be disposed on the display 194. The touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. Visual output related to the touch operation may be provided by using the display 194. In some other embodiments, the touch sensor 180K may alternatively be disposed on a surface of the terminal device 200 at a position different from that of the display 194.

The button 190 includes a power button, a volume button, and the like. The button 190 may be a mechanical button, or may be a touch button. The terminal device 200 may receive button input, and generate button signal input related to user settings and function control of the terminal device 200.

The motor 191 may generate a vibration prompt. The motor 191 may be used for an incoming call vibration prompt, or may be used for touch vibration feedback. For example, touch operations performed on different applications (for example, photo taking and audio playing) may be corresponding to different vibration feedback effects. The motor 191 may also correspond to different vibration feedback effects for touch operations performed in different regions of the display 194. Different application scenarios (for example, a time reminder, information receiving, an alarm clock, and a game) may also be corresponding to different vibration feedback effects. A touch vibration feedback effect may be further customized.

The indicator 192 may be an indicator light, and may indicate a charging status or a power change, or may indicate a message, a missed call, a notification, or the like.

The SIM card interface 195 is configured to connect to a SIM card. The SIM card may be inserted into the SIM card interface 195 or pulled out of the SIM card interface 195, to implement contact with or separation from the terminal device 200. The terminal device 200 may support one or N SIM card interfaces, and N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The terminal device 200 interacts with a network by using a SIM card, to implement functions such as conversation and data communication. In some embodiments, the terminal device 200 uses an eSIM, namely, an embedded SIM card. The eSIM card may be embedded in the terminal device 200, and cannot be separated from the terminal device 200.

It should be understood that the terminal device 200 shown in FIG. 14 is only an example, and the terminal device 200 may have more or fewer components than those shown in FIG. 14, may combine two or more components, or may have different component configurations. The components shown in FIG. 14 may be implemented in hardware including one or more signal processing and/or application-specific integrated circuits, software, or a combination of hardware and software.

The terminal device 200 in this application may be a device that uses an MCU as a computing core. The following specifically describes the MCU of the terminal device 200.

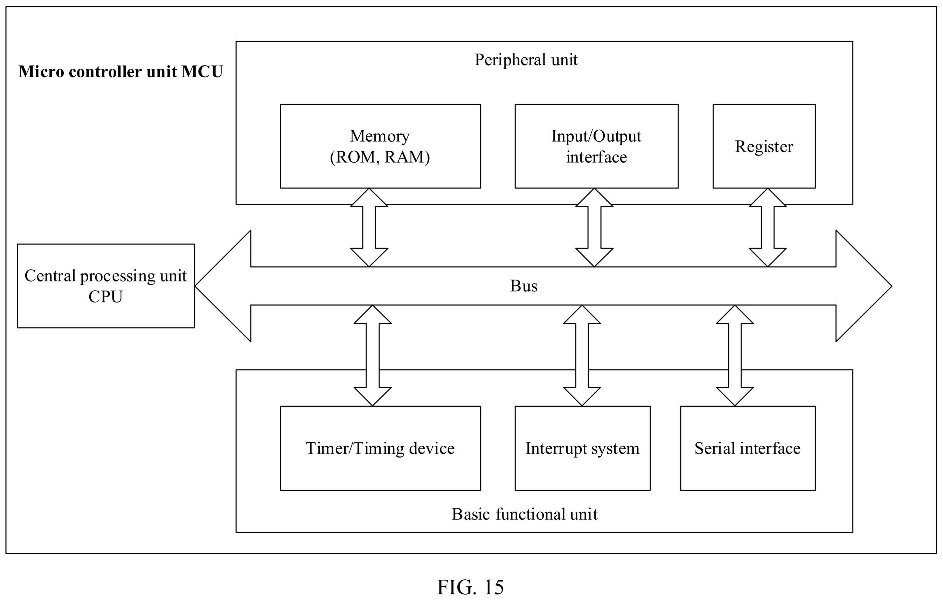

**FIG. 15** **shows an example of a structure of an MCU in a terminal device 200.**

As shown in FIG. 15, the MCU may include a central processing unit CPU, a peripheral unit, and a basic functional unit. The peripheral unit may include a memory (for example, a ROM and a RAM), an input/output interface, and a register. The basic functional unit may include a timer/timing device, an interrupt system, and a serial interface. The MCU may be configured to implement functions such as timing, serving as an input/output interface to link to an external channel, implementing external interrupt control, and providing a communication interface. The CPU, each component in the peripheral unit, and each component in the basic functional unit may be coupled through a bus.

The memory may be configured to store a computer program and data. A type of the memory is not limited in this embodiment of this application. For example, in addition to a ROM and a RAM, a pseudo static random access memory (pseudo static random access memory, PSRAM) and the like may be further integrated into the MCU.

The CPU may include components such as a controller and an arithmetic unit. The CPU may be configured to read binary instructions from the memory and execute the binary instructions. That is, the MCU may implement on-chip instruction fetching and execution.

The input/output interface may include the USB interface 130 shown in FIG. 14. Not limited to the USB interface 130, the input/output interface integrated into the MCU may further include one or more of the following: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and the like.

The register may be configured to temporarily store data and an operation structure participating in an operation.

The timer/timing device may be configured to measure time at which an event occurs or measure a time difference between two events.

The interrupt system may be configured to implement real-time control, automatic fault handling, and data transfer between the CPU and a peripheral device.

The serial interface may be an extended interface using a serial communication manner, and may be configured to implement bit-by-bit sequential transmission of data.

It may be understood that the processor 110, the internal memory 121, and the USB interface 130 shown in FIG. 14 may be integrated into one chip to implement a function of the MCU.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures in the methods in the foregoing embodiments may be completed by a computer program instructing related hardware. The program may be stored in a computer-readable storage medium. When the program is executed, the procedures in the foregoing method embodiments may be included. The foregoing storage medium includes any medium that can store program code, such as a ROM or a random access memory RAM, a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An application installation package generation method, wherein the method comprises:
recognizing, by a server, difference content, wherein the difference content is content that varies after a source component of an application is merged with a base version component, and the base version component is a source file of an operating system on a terminal device and a source file of a service developed based on the operating system;
adding, by the server, redirection information to the difference content, wherein the redirection information indicates that a link address range of the difference content is a first link address range, the first link address range does not conflict with a second link address range, the second link address range is a link address range of the base version component, the first link address range is a storage address range on the terminal device, the second link address range is another storage address range on the terminal device, and the storage address range is an address range of a memory for running executable program code; and
generating, by the server, a first image, and extracting first content in the first image to generate an installation package of the application, wherein the first content is the difference content being compiled and statically linked, and the first image is generated after the server compiles and statically links the base version component and the difference content.

2. The method according to claim 1, wherein the first link address range comprises N preset link address ranges, N is a positive integer greater than 1, and generating, by the server, the first image specifically comprises:
compiling and statically linking, by the server, the base version component and the difference content N times to generate the first images of N versions that are in one-to-one correspondence with the N preset link address ranges; and
extracting, by the server, the first content in the first image to generate the installation package of the application specifically comprises:
extracting, by the server, the first content in the first images of the N versions to generate installation packages of the N versions of the application.

3. The method according to claim 2, wherein the installation packages of the N versions of the application comprise an installation package that is of the application and that corresponds to a free storage address range on the terminal device, and the method further comprises:
sending, by the server to the terminal device based on the free storage address range on the terminal device, the installation package that is of the application and that corresponds to the free storage address range.

4. The method according to claim 3, wherein the free storage address range on the terminal device is sent by the terminal device to the server.

5. The method according to any one of claims 2 to 4, wherein the N preset link address ranges have an equal size.

6. The method according to claim 1, wherein the first link address range is one link address range, and before adding, by the server, the redirection information to the difference content, the method further comprises:
receiving, by the server, a first message sent by the terminal device, wherein the first message comprises the first link address range, and the first link address range is a free storage address range on the terminal device; and
adding, by the server, the redirection information to the difference content specifically comprises:
adding, by the server, the redirection information to the difference content based on the first link address range.

7. The method according to claim 6, wherein the method further comprises:
sending, by the server, the installation package of the application to the terminal device based on the first link address range.

8. The method according to any one of claims 1 to 7, wherein the difference content is an entire difference file or difference code in the difference file.

9. The method according to any one of claims 1 to 8, wherein the source component of the application exists in any one of the following forms: a source file form; and a form of code snippets scattered in the base version component.

10. The method according to any one of claims 1 to 8, wherein the installation package of the application comprises an init segment, and the init segment is used to complete initialization and registration of the application.

11. An application installation method, applied to a terminal device, wherein the method comprises:
receiving, by the terminal device, an installation package of an application sent by a server, wherein the installation package of the application is generated based on first content in a first image, the first content is difference content being compiled and statically linked, the difference content is content that varies after a source component of the application is merged with a base version component, the base version component is a source file of an operating system on the terminal device and a source file of a service developed based on the operating system, the first image is generated after the server compiles and statically links the base version component and the difference content, a link address range of the difference content is a first link address range, the first link address range does not conflict with a second link address range, the second link address range is a link address range of the base version component, the first link address range is a storage address range on the terminal device, the second link address range is another storage address range on the terminal device, and the storage address range is an address range of a memory for running executable program code; and
installing, by the terminal device, the application in the first link address range based on the installation package of the application.

12. The method according to claim 11, wherein the method further comprises:
sending, by the terminal device, a first message to the server, wherein the first message comprises the first link address range, and the first link address range is a free storage address range on the terminal device.

13. The method according to claim 11 or 12, wherein the difference content is an entire difference file or difference code in the difference file.

14. The method according to any one of claims 11 to 13, wherein the source component of the application exists in any one of the following forms: a source file form; and a form of code snippets scattered in the base version component.

15. The method according to any one of claims 11 to 14, wherein the installation package of the application comprises an init segment, and the init segment is used to complete initialization and registration of the application.

16. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 10 or 11 to 15.

17. A computer storage medium, wherein the computer storage medium stores a computer program, the computer program comprises program instructions, and when the program instructions are run on an electronic device, the electronic device is enabled to perform the method according to any one of claims 1 to 10 or 11 to 15.
